# EUROPÄISCHE PATENTANMELDUNG

(11) **EP 3 805 787 A1**
(43) Veröffentlichungstag der Anmeldung: **14.04.2021**
(21) Anmeldenummer: 19202701.9
(22) Anmeldetag: 11.10.2019
(51) Int. Cl.: G01S 7/481, G01S 17/08

(54) **VORRICHTUNG ZUR OPTISCHEN DISTANZMESSUNG ZU EINEM STREUENDEN ZIELOBJEKT ODER EINEM REFLEKTIERENDEN ZIELOBJEKT**

(71) Anmelder: Hilti Aktiengesellschaft, 9494 Schaan (LI)
(72) Erfinder: Gogolla, Torsten, 9494 Schaan (LI); Winter, Andreas, 6800 Feldkirch (AT)
(74) Vertreter: Hilti Aktiengesellschaft Corporate Intellectual Property

(57) **Zusammenfassung**

Vorrichtung (10) zur optischen Distanzmessung zu einem streuenden Zielobjekt oder einem reflektierenden Zielobjekt, aufweisend eine Laserstrahlquelle (13), die einen Laserstrahl (14) aussendet, einen Detektor (15), der einen am streuenden Zielobjekt gestreuten Empfangsstrahl oder am reflektierenden Zielobjekt reflektierten Empfangsstrahl empfängt, und eine Laserstrahlformungseinrichtung (33) mit einer ersten Laserstrahlformungsoptik (18) und einer zweiten Laserstrahlformungsoptik (31), wobei die zweite Laserstrahlformungsoptik (31) als erstes Array von reflektierenden Sendeelementen ausgebildet ist und die Orientierung der reflektierenden Sendeelemente mittels einer ersten Steuereinheit verstellbar ist.

## Beschreibung

### Technisches Gebiet

Die vorliegende Erfindung betrifft eine Vorrichtung zur optischen Distanzmessung zu einem streuenden Zielobjekt oder einem reflektierenden Zielobjekt gemäß dem Oberbegriff des Anspruchs 1.

### Stand der Technik

Aus EP 2 527 867 B1 ist eine Distanzmesseinrichtung mit koaxialer Anordnung bekannt, die einen kollimierten Laserstrahl erzeugt. Die Distanzmesseinrichtung umfasst eine Laserstrahlquelle, einen Detektor, eine Strahlformungsoptik mit einer Laserstrahlformungsoptik und einer Empfangsstrahlformungsoptik und eine Strahlteilungsoptik, die den Laserstrahl und Empfangsstrahl voneinander trennt. Die Strahlformungsoptik ist als Kollimationsoptik ausgebildet, die den Laserstrahl in einen kollimierten Laserstrahl umformt. Der kollimierte Laserstrahl, der die Distanzmesseinrichtung verlässt, ist für die optische Distanzmessung zu streuenden Zielobjekten ausgelegt. Für die optische Distanzmessung zu reflektierenden Zielobjekten ist die Strahlungsleistung der Laserstrahlquelle zu groß, was zu einem Übersteuern des Detektors führen kann. Bei reflektierenden Zielobjekten, die als Einzelretroreflektor ausgebildet sind, ist die Verwendung von kollimierten Laserstrahlen nachteilig. Ein kollimierter Laserstrahl muss sehr genau auf das Zentrum des Einzelretroreflektors ausgerichtet werden, um zu verhindern, dass der Empfangsstrahl nicht auf den Detektor auftrifft. Wenn der Laserstrahl nicht auf das Zentrum des Einzelretroreflektors auftrifft, entsteht ein Parallelversatz des Empfangsstrahls gegenüber der optischen Achse des Laserstrahls.

Aus dem Stand der Technik sind unterschiedliche Vorschläge bekannt, um einen kollimierten Laserstrahl, der für die optische Distanzmessung zu streuenden Zielobjekten ausgelegt, mithilfe einer Anpasseinrichtung an reflektierende Zielobjekte anzupassen.

Aus DE 10 2013 205 589 A1 ist eine Vorrichtung zur optischen Distanzmessung zu streuenden Zielobjekten und reflektierenden Zielobjekten bekannt. Die Vorrichtung umfasst eine Laserstrahlquelle, einen Detektor und eine Laserstrahlformungseinrichtung mit einer ersten Laserstrahlformungsoptik und einer zweiten Laserstrahlformungsoptik, die von der ersten Laserstrahlformungsoptik verschieden ist und im Strahlengang des Laserstrahls hinter der ersten Laserstrahlformungsoptik angeordnet ist. Die erste Laserstrahlformungsoptik ist als Kollimationsoptik ausgebildet und für die Distanzmessung zu streuenden Zielobjekten ausgelegt. Die Laserstrahlquelle und die erste Laserstrahlformungsoptik sind an einem gemeinsamen Optikträger befestigt und bilden eine Distanzmesseinrichtung. Die zweite Laserstrahlformungsoptik ist für die Distanzmessung zu reflektierenden Zielobjekten ausgelegt und als Zerstreuungsoptik ausgebildet. Um den Laserstrahl an unterschiedliche Entfernungsbereiche von reflektierenden Zielobjekten anzupassen, können mehrere, als Zerstreuungsoptiken ausgebildete, zweite Laserstrahlformungsoptiken vorgesehen sein, die sich in den zerstreuenden Eigenschaften voneinander unterscheiden. Die Zerstreuungsoptiken sind in eine beispielsweise als Optikrad ausgebildete Anpasseinrichtung integriert, die außerhalb der Distanzmesseinrichtung angeordnet ist.

In einer Weiterentwicklung umfasst die Vorrichtung eine Empfangsstrahlformungseinrichtung mit einer ersten Empfangsstrahlformungsoptik und einer zweiten Empfangsstrahlformungsoptik, die im Strahlengang des gestreuten oder reflektierten Empfangsstrahls vor der ersten Empfangsstrahlformungsoptik angeordnet ist. Die erste Empfangsstrahlformungsoptik ist für die Distanzmessung zu streuenden Zielobjekten ausgelegt. Die zweite Empfangsstrahlformungsoptik ist für die Distanzmessung zu reflektierenden Zielobjekten ausgelegt und als Streuscheibe ausgebildet. Mit Hilfe der Streuscheiben kann der reflektierte Empfangsstrahl gedämpft werden, um ein Übersteuern des Detektors zu verhindern. Um den Empfangsstrahl an unterschiedliche Entfernungsbereiche von reflektierenden Zielobjekten anzupassen, sind mehrere, als Streuscheiben ausgebildete, zweite Empfangsstrahlformungsoptiken vorgesehen, die sich in den lichtstreuenden Eigenschaften voneinander unterscheiden.

Die aus DE 10 2013 205 589 A1 bekannte Vorrichtung zur optischen Distanzmessung weist mehrere Nachteile auf: Fremdlicht in Form von direkt oder indirekt einfallendem Sonnenlicht wird nicht ausreichend gedämpft und erhöht den Messfehler oder die erforderliche Messzeit. Im Gegensatz zum Laserstrahl ist Fremdlicht nicht gerichtet, sondern kann aus unterschiedlichen Richtungen einfallen. Die als Streuscheiben ausgebildeten zweiten Empfangsstrahlformungsoptiken dämpfen Fremdlicht sehr viel schwächer als den gerichteten Empfangsstrahl. Die Anpasseinrichtung dient ausschließlich zur Anpassung des Laserstrahls und ggfs. des Empfangsstrahls an reflektierende Zielobjekte, eine Anpassung des Laserstrahls und ggfs. des Empfangsstrahls an streuende Zielobjekte, die in unterschiedlichen Entfernungsbereichen angeordnet sind, ist nicht möglich.

Aus WO 2016/184735 A1 ist eine weitere Vorrichtung zur optischen Distanzmessung zu streuenden Zielobjekten und reflektierenden Zielobjekten bekannt. Die Vorrichtung umfasst eine Laserstrahlquelle, einen Detektor und eine Laserstrahlformungseinrichtung mit einer ersten Laserstrahlformungsoptik und einer zweiten Laserstrahlformungsoptik, die von der ersten Laserstrahlformungsoptik verschieden ist und im Strahlengang des Laserstrahls hinter der ersten Laserstrahlformungsoptik angeordnet ist. Die erste Laserstrahlformungsoptik ist als Kollimationsoptik ausgebildet und für die Distanzmessung zu streuenden Zielobjekten ausgelegt. Die zweite Laserstrahlformungsoptik ist als erstes Array von mehreren Sendepixeln ausgebildet und für die Distanzmessung zu reflektierenden Zielobjekten, die als Einzelretroreflektor oder Flächenretroreflektor ausgebildet sein können, ausgelegt. Der Transmissionsgrad der Sendepixel ist mittels einer ersten Steuereinheit zwischen drei Zuständen, undurchlässig mit einem Transmissionsgrad kleiner als 10 %, teildurchlässig mit einem Transmissionsgrad zwischen 10 % und 90 % und volldurchlässig mit einem Transmissionsgrad grösser als 90 %, schaltbar.

Über den Transmissionsgrad der einzelnen Sendepixel des ersten Arrays kann der Laserstrahl an den Typ des Zielobjektes angepasst werden. Um ein Übersteuern des Detektors bei der Distanzmessung zu reflektierenden Zielobjekten zu verhindern, muss die Strahlungsleistung des auftreffenden Empfangsstrahls deutlich kleiner als die Strahlungsleistung des ausgesandten Laserstrahls sein. Bei einem Einzelretroreflektor werden mindestens 50 % der Sendepixel des ersten Arrays, die im Strahlengang des Laserstrahls angeordnet sind, in den undurchlässigen Sendezustand geschaltet. Die Sendepixel, die im Strahlengang des Laserstrahls angeordnet sind und teildurchlässig oder volldurchlässig ausgebildet sind, bilden eine Sendeblende für den Laserstrahl, die eine starke Aufweitung des Laserstrahls ermöglicht. Durch die Aufweitung kann die erforderliche Genauigkeit, mit der der Laserstrahl auf den Einzelretroreflektor ausgerichtet werden muss, reduziert werden. Bei teildurchlässigen Sendepixeln lässt sich der Anteil der durchgelassenen Strahlungsleistung über den Transmissionsgrad der Sendepixel verändern; je kleiner der Transmissionsgrad ist, umso stärker wird der Laserstrahl gedämpft.

In einer Weiterentwicklung umfasst die Vorrichtung zusätzlich eine Empfangsstrahlformungseinrichtung mit einer ersten Empfangsstrahlformungsoptik und einer zweiten Empfangsstrahlformungsoptik, die im Strahlengang des gestreuten oder reflektierten Empfangsstrahls vor der ersten Empfangsstrahlformungsoptik angeordnet ist. Die erste Empfangsstrahlformungsoptik ist als Kollimationsoptik ausgebildet und für die Distanzmessung zu streuenden Zielobjekten ausgelegt. Die zweite Empfangsstrahlformungsoptik ist als zweites Array von mehreren Empfangspixeln ausgebildet und für die Distanzmessung zu reflektierenden Zielobjekten ausgelegt. Der Transmissionsgrad der Empfangspixel ist mittels einer zweiten Steuereinheit zwischen drei Zuständen, undurchlässig mit einem Transmissionsgrad kleiner als 10 %, teildurchlässig mit einem Transmissionsgrad zwischen 10 % und 90 % und volldurchlässig mit einem Transmissionsgrad grösser als 90 %, schaltbar.

Die aus WO 2016/184735 A1 bekannte Vorrichtung zur optischen Distanzmessung ermöglicht keine Anpassung des Laserstrahls an verschiedene Typen von streuenden Zielobjekten und an die Entfernung zum streuenden Zielobjekt. Die zweite Laserstrahlformungsoptik dient ausschließlich zur Anpassung des Laserstrahls an verschiedene Typen von reflektierenden Zielobjekten, die Entfernung zum reflektierenden Zielobjekt und die Größe des reflektierenden Zielobjekts. Nachteilig ist außerdem, dass durch die Blende ein großer Teil des Laserstrahls ausgeblendet wird, was wegen Beugungseffekten zu einem stark strukturierten und inhomogenen Laserstrahl und zu einer starken Signalvariation führen kann.

### Darstellung der Erfindung

Die Aufgabe der vorliegenden Erfindung besteht in der Entwicklung einer Vorrichtung zur optischen Distanzmessung, bei der der Laserstrahl an streuende Zielobjekte und an reflektierende Zielobjekte angepasst werden kann. Außerdem soll Fremdlicht in der Vorrichtung mit geringem apparativem Aufwand gedämpft werden.

Diese Aufgabe wird bei der eingangs genannten Vorrichtung zur optischen Distanzmessung zu einem streuenden Zielobjekt oder einem reflektierenden Zielobjekt erfindungsgemäß durch die Merkmale des unabhängigen Anspruchs 1 gelöst. Vorteilhafte Weiterbildungen sind in den abhängigen Ansprüchen angegeben.

Erfindungsgemäß ist die Vorrichtung zur optischen Distanzmessung dadurch gekennzeichnet, dass die zweite Laserstrahlformungsoptik als erstes Array von reflektierenden Sendeelementen ausgebildet ist, wobei die Orientierung der reflektierenden Sendeelemente mittels einer ersten Steuereinheit verstellbar ist. Eine als erstes Array von mehreren reflektierenden Sendeelementen ausgebildete zweite Laserstrahlformungsoptik eignet sich für die optische Distanzmessung zu streuenden Zielobjekten und zu reflektierenden Zielobjekten. Über die Orientierung der einzelnen Sendeelemente kann der Laserstrahl an den Typ des Zielobjektes, die Entfernung zum Zielobjekt und die Größe des Zielobjektes angepasst werden. Bei Zielobjekten werden streuende Zielobjekte, bei denen ein auftreffender Laserstrahl überwiegend gestreut wird, und reflektierende Zielobjekte, bei denen ein auftreffender Laserstrahl überwiegend reflektiert wird, unterschieden.

Die reflektierenden Sendeelemente des ersten Arrays sind als reflektierende optische Elemente ausgebildet, deren Orientierung in mindestens einer Richtung verstellbar ist, wobei die Orientierung der einzelnen Sendeelemente unabhängig voneinander verstellbar ist. Die zweite Laserstrahlformungsoptik ist im Strahlengang des Laserstrahls hinter der ersten Laserstrahlformungsoptik angeordnet und dient zur weiteren Strahlformung des von der ersten Laserstrahlformungsoptik geformten Laserstrahls. Die erste Laserstrahlformungsoptik ist in der Regel als Kollimationsoptik ausgebildet, die den divergenten Laserstrahl der Laserstrahlquelle in einen kollimierten Laserstrahl umformt. Die zweite Laserstrahlformungsoptik ermöglicht es, den kollimierten Laserstrahl umzuformen und an unterschiedliche streuende Zielobjekte und an unterschiedliche reflektierende Zielobjekte anzupassen.

Als streuende Zielobjekte sind Zielobjekte definiert, an denen ein Laserstrahl gestreut wird, und als reflektierende Zielobjekte sind Zielobjekte definiert, an denen ein Laserstrahl überwiegend reflektiert wird. Reflektierende Zielobjekte werden in Einzelretroreflektoren und Flächenretroreflektoren unterschieden. Als Einzelretroreflektoren sind reflektierende Zielobjekte definiert, die aus einem Prisma bestehen, wobei die Abmessungen des Prismas grösser als die typischen Laserstrahldurchmesser sind und ein auftreffender Laserstrahl eine Fläche des Tripelprismas erfasst. Als Flächenretroreflektoren sind reflektierende Zielobjekte definiert, die aus einer Mehrzahl von nebeneinander angeordneten Prismen bestehen, wobei die Abmessungen der Prismen kleiner als die typischen Laserstrahldurchmesser sind und ein auftreffender Laserstrahl mehrere Prismen erfasst; Beispiele für Flächenretroreflektoren sind Reflexionsfolien und Katzenaugen. Streuende Zielobjekte werden im Rahmen der vorliegenden Anmeldung in weiße streuende Zielobjekte, graue streuende Zielobjekte und schwarze streuende Zielobjekte unterschieden. Die Unterscheidung der streuenden Zielobjekte erfolgt mittels des sogenannten Wert, der die streuenden Eigenschaften von streuenden Zielobjekten beschreibt. Als weiße streuende Zielobjekte sind streuende Zielobjekte definiert, die einen hohen Rückstreugrad (Albedo) von mehr als 90% aufweisen.

In einer ersten bevorzugten Variante ist in der ersten Steuereinheit mindestens eine erste Sendeanordnung für das erste Array gespeichert, wobei die reflektierenden Sendeelemente in der ersten Sendeanordnung für den Laserstrahl einen Konvexspiegel bilden. Die erste Sendeanordnung, bei der die reflektierenden Sendeelemente für den Laserstrahl einen Konvexspiegel bilden, ist für die optische Distanzmessung zu Einzelretroreflektoren ausgelegt. Bei der optischen Distanzmessung zu einem Einzelretroreflektor wird der Laserstrahl durch die als Konvexspiegel angeordneten reflektierenden Sendeelemente aufgeweitet. Durch die Aufweitung kann die erforderliche Genauigkeit, mit der der Laserstrahl auf den Einzelretroreflektor ausgerichtet werden muss, reduziert werden. Bei Einzelretroreflektoren sollte das Zentrum des Einzelretroreflektors vom Laserstrahl anvisiert werden, damit der reflektierte Empfangsstrahl vom Detektor erfasst wird. Wenn der Laserstrahl das Zentrum des Einzelretroreflektors nicht trifft, kann der reflektierte Empfangsstrahl durch Parallelversatz den Detektor verfehlen.

In einer zweiten bevorzugten Variante ist in der ersten Steuereinheit mindestens eine zweite Sendeanordnung für das erste Array gespeichert, wobei die reflektierenden Sendeelemente in der zweiten Sendeanordnung für den Laserstrahl einen Konkavspiegel bilden. Die voreingestellte zweite Sendeanordnung, bei der die reflektierenden Sendeelemente für den Laserstrahl einen Konkavspiegel bilden, ist für die optische Distanzmessung zu streuenden Zielobjekten ausgelegt. Bei der optischen Distanzmessung zu streuenden Zielobjekten wird der Laserstrahl durch die als Konkavspiegel angeordneten reflektierenden Sendeelemente fokussiert, wobei die Brennweite des Konkavspiegels von der Entfernung des streuenden Zielobjekts abhängt. Bei streuenden Zielobjekten ist wichtig, dass die vom Detektor erfasste Strahlungsleistung groß genug ist, und der Strahldurchmesser des Laserstrahls beim Auftreffen auf das streuende Zielobjekt sollte nicht zu groß sein. Um den Strahldurchmesser des Laserstrahls auf dem streuenden Zielobjekt zu begrenzen, ist es vorteilhaft, den Laserstrahl mithilfe des Konkavspiegels zu fokussieren.

In einer dritten bevorzugten Variante ist in der ersten Steuereinheit mindestens eine dritte Sendeanordnung für das erste Array gespeichert, wobei die Sendeelemente in der dritten Sendeanordnung für den Laserstrahl einen Planspiegel bilden. Die dritte Sendeanordnung, bei der die reflektierenden Sendeelemente für den Laserstrahl einen Planspiegel bilden, ist für die optische Distanzmessung zu Flächenretroreflektoren und zu streuenden Zielobjekten ausgelegt. Bei der optischen Distanzmessung zu Flächenretroreflektoren wird der Laserstrahl durch die als Planspiegel angeordneten reflektierenden Sendeelemente umgelenkt. Bei Flächenretroreflektoren ist wichtig, dass der Strahldurchmesser des Laserstrahls beim Auftreffen auf das streuende Zielobjekt nicht zu groß, aber auch nicht zu klein ist. Ein zu großer Strahldurchmesser kann bei schräg gestellten Flächenretroreflektoren zu Messfehlern führen. Ist der Strahldurchmesser hingegen kleiner als die Prismenelemente der Flächenretroreflektoren kann es zu einer starken Variation in der Empfangsleistung kommen, was vermieden werden sollte.

Bevorzugt sind in der ersten Steuereinheit mindestens eine erste Sendeanordnung für das erste Array, mindestens eine zweite Sendeanordnung für das erste Array und mindestens eine dritte Sendeanordnung für das erste Array gespeichert, wobei die reflektierenden Sendeelemente in der ersten Sendeanordnung für den Laserstrahl einen Konvexspiegel bilden, die reflektierenden Sendeelemente in der zweiten Sendeanordnung für den Laserstrahl einen Konkavspiegel bilden und die reflektierenden Sendeelemente in der dritten Sendeanordnung für den Laserstrahl einen Planspiegel bilden. Eine erfindungsgemäße Vorrichtung, die mindestens eine erste Sendeanordnung für das erste Array, mindestens eine zweite Sendeanordnung für das erste Array und mindestens eine dritte Sendeanordnung für das erste Array aufweist, eignet sich für die optische Distanzmessung zu Einzelretroreflektoren, zu streuenden Zielobjekten und zu Flächenretroreflektoren.

Die Verwendung mehrerer Sendeanordnungen für das erste Array ermöglicht die Anpassung der zweiten Laserstrahlformungsoptik an unterschiedliche Entfernungsbereiche, in denen ein Zielobjekt angeordnet ist, an unterschiedliche Typen von Zielobjekten (Einzelretroreflektor, Flächenretroreflektor oder streuendes Zielobjekt) und an unterschiedliche Größen von Zielobjekten. Dabei ist die voreingestellte erste Sendeanordnung, bei der die reflektierenden Sendeelemente für den Laserstrahl einen Konvexspiegel bilden, für die Distanzmessung zu Einzelretroreflektoren ausgelegt, die voreingestellte zweite Sendeanordnung, bei der die Sendeelemente für den Laserstrahl einen Konkavspiegel bilden, ist für die Distanzmessung zu streuenden Zielobjekten ausgelegt und die voreingestellte dritte Sendeanordnung, bei der die Sendeelemente für den Laserstrahl einen Planspiegel bilden, ist für die Distanzmessung zu Flächenretroreflektoren ausgelegt.

Bevorzugt sind die reflektierenden Sendeelemente des ersten Arrays zwischen einem ersten Sendewinkelbereich und einem zweiten Sendewinkelbereich verstellbar, wobei ein von einem Sendeelement umgelenkter Sendeteilstrahl des Laserstrahls im ersten Sendewinkelbereich eine Austrittsöffnung, die im Strahlengang des Laserstrahls hinter der zweiten Laserstrahlformungsoptik angeordnet, passiert und im zweiten Sendewinkelbereich auf eine erste Absorptionsfläche auftrifft. Die Verwendung eines ersten Arrays von reflektierenden Sendeelementen, die zwischen einem ersten Sendewinkelbereich und einem zweiten Sendewinkelbereich verstellbar sind, ermöglicht es, die Strahlungsleistung im Strahlengang des Laserstrahls zu reduzieren. Die Sendeteilstrahlen von reflektierenden Sendeelementen, die im zweiten Sendewinkelbereich angeordnet sind, werden ausgeblendet und die Strahlungsleistung des Laserstrahls wird reduziert. Die Reduzierung der Strahlungsleistung wird für die Distanzmessung zu Einzelretroreflektoren und zu Flächenretroreflektoren verwendet.

Als Sendeteilstrahl wird der Teil des Laserstrahls bezeichnet, der auf ein reflektierendes Sendeelement auftrifft und vom reflektierenden Sendeelement umgelenkt wird. Das reflektierende Sendeelement sorgt für eine Strahlumlenkung des Sendeteilstrahls, wobei die Strahlform des Sendeteilstrahls im Wesentlichen unverändert bleibt. Bei der dritten Sendeanordnung (Planspiegel) erfolgt eine Strahlumlenkung der Sendeteilstrahlen um 90°, wobei grundsätzlich auch Umlenkwinkel ≠ 90° möglich sind (Konkav- und Konvexspiegel). Die Werte für den ersten Sendewinkelbereich und zweiten Sendewinkelbereich werden für jedes reflektierendes Sendeelement des ersten Arrays bestimmt.

Die Strahlungsleistung des von der Laserstrahlquelle ausgesandten Laserstrahls ist üblicherweise für die optische Distanzmessung zu streuenden Zielobjekten ausgelegt. Bei streuenden Zielobjekten wird der Laserstrahl am Zielobjekt über einen großen Winkelbereich gestreut, nur ein geringer Teil der Strahlungsleistung wird vom Detektor erfasst. Bei der Distanzmessung zu reflektierenden Zielobjekten wird der Laserstrahl am Zielobjekt reflektiert und trifft als gerichteter Empfangsstrahl auf den Detektor. Um ein Übersteuern des Detektors bei der Distanzmessung zu reflektierenden Zielobjekten zu verhindern, muss die Strahlungsleistung des auftreffenden Empfangsstrahls deutlich kleiner als die Strahlungsleistung des ausgesandten Laserstrahls sein. Dabei kann die Reduzierung der Strahlungsleistung über Maßnahmen im Strahlengang des Laserstrahls und/oder über Maßnahmen im Strahlengang des Empfangsstrahls erfolgen.

In einer Weiterentwicklung umfasst die Vorrichtung zur optischen Distanzmessung eine Empfangsstrahlformungseinrichtung mit einer ersten Empfangsstrahlformungsoptik und einer zweiten Empfangsstrahlformungsoptik, die von der ersten Empfangsstrahlformungsoptik verschieden ist und im Strahlengang des gestreuten Empfangsstrahls oder reflektierten Empfangsstrahls vor der ersten Empfangsstrahlformungsoptik angeordnet ist. Die erste Empfangsstrahlformungsoptik ist im Strahlengang des Empfangsstrahls hinter der zweiten Empfangsstrahlformungsoptik angeordnet und dient zur Strahlformung des gestreuten oder reflektierten Empfangsstrahls. Die erste Empfangsstrahlformungsoptik ist in der Regel als fokussierende Optik ausgebildet, die den Empfangsstrahl bei großen Entfernungen zum Zielobjekt (z.B. grösser als 20 m) auf den Detektor fokussiert. Die zweite Empfangsstrahlformungsoptik dient dazu, den von reflektierenden Zielobjekten reflektierten Empfangsstrahl anzupassen.

Bevorzugt ist die zweite Empfangsstrahlformungsoptik als zweites Array von reflektierenden Empfangselementen ausgebildet, wobei die Orientierung der reflektierenden Empfangselemente mittels einer zweiten Steuereinheit verstellbar ist. Die reflektierenden Empfangselemente sind als reflektierende optische Elemente ausgebildet, deren Orientierung in mindestens einer Richtung verstellbar ist, wobei die Orientierung der einzelnen reflektierenden Empfangselemente unabhängig voneinander verstellbar ist. Eine als zweites Array von mehreren reflektierenden Empfangselementen ausgebildete zweite Empfangsstrahlformungsoptik eignet sich für die optische Distanzmessung zu streuenden Zielobjekten und zu reflektierenden Zielobjekten. Über die strahlumlenkenden Eigenschaften der einzelnen reflektierenden Empfangselemente kann der Empfangsstrahl an den Typ des Zielobjektes, die Entfernung zum reflektierenden Zielobjekt und die Größe des reflektierenden Zielobjektes angepasst werden.

In einer ersten bevorzugten Variante ist in der zweiten Steuereinheit mindestens eine erste Empfangsanordnung für das zweite Array gespeichert, wobei die reflektierenden Empfangselemente einen Konvexspiegel für den Empfangsstrahl bilden. Die erste Empfangsanordnung, bei der die reflektierenden Empfangselemente für den Empfangsstrahl einen Konvexspiegel bilden, ist vor allem für die Distanzmessung zu Einzelretroreflektoren ausgelegt.

In einer zweiten bevorzugten Variante ist in der zweiten Steuereinheit mindestens eine zweite Empfangsanordnung für das zweite Array gespeichert, wobei die reflektierenden Empfangselemente einen Konkavspiegel für den Empfangsstrahl bilden. Die zweite Empfangsanordnung, bei der die reflektierenden Empfangselemente für den Empfangsstrahl einen Konkavspiegel bilden, ist vor allem für die Distanzmessung zu streuenden Zielobjekten ausgelegt.

In einer dritten bevorzugten Variante ist in der zweiten Steuereinheit mindestens eine dritte Empfangsanordnung für das zweite Array gespeichert, wobei die reflektierenden Empfangselemente einen Planspiegel für den Empfangsstrahl bilden. Die dritte Empfangsanordnung, bei der die reflektierenden Empfangselemente für den Empfangsstrahl einen Planspiegel bilden, ist für die Distanzmessung zu Flächenretroreflektoren ausgelegt.

Bevorzugt sind in der zweiten Steuereinheit mindestens eine erste Empfangsanordnung für das zweite Array, mindestens eine zweite Empfangsanordnung für das zweite Array und mindestens eine dritte Empfangsanordnung für das zweite Array gespeichert, wobei die reflektierenden Empfangselemente in der ersten Empfangsanordnung für den Empfangsstrahl einen Konvexspiegel bilden, die reflektierenden Empfangselemente in der zweiten Empfangsanordnung für den Empfangsstrahl einen Konkavspiegel bilden und die reflektierenden Empfangselemente in der dritten Empfangsanordnung für den Empfangsstrahl einen Planspiegel bilden. Eine erfindungsgemäße Vorrichtung, die mindestens eine erste Empfangsanordnung für das zweite Array, mindestens eine zweite Empfangsanordnung für das zweite Array und mindestens eine dritte Empfangsanordnung für das zweite Array aufweist, eignet sich für die optische Distanzmessung zu Einzelretroreflektoren, zu streuenden Zielobjekten und zu Flächenretroreflektoren.

Bevorzugt sind die reflektierenden Empfangselemente unabhängig voneinander zwischen einem ersten Empfangswinkelbereich und einem zweiten Empfangswinkelbereich verstellbar, wobei ein von einem reflektierenden Empfangselement umgelenkter Empfangsteilstrahl des Empfangsstrahls im ersten Empfangswinkelbereich auf den Detektor auftrifft und im zweiten Empfangswinkelbereich auf eine zweite Absorptionsfläche auftrifft. Die Verwendung eines zweiten Arrays von reflektierenden Empfangselementen, die zwischen einem ersten Empfangswinkelbereich und einem zweiten Empfangswinkelbereich verstellbar sind, ermöglicht es, die Strahlungsleistung im Strahlengang des Empfangsstrahls zu reduzieren. Die Empfangsteilstrahlen von reflektierenden Empfangselementen, die im zweiten Empfangswinkelbereich angeordnet sind, werden ausgeblendet und die Strahlungsleistung des Empfangsstrahls wird reduziert. Die Reduzierung der Empfangsleistung wird für die Distanzmessung zu Einzelretroreflektoren und zu Flächenretroreflektoren verwendet.

Als Empfangsteilstrahl wird ein Teil des Empfangsstrahls bezeichnet, der auf ein reflektierendes Empfangselement auftrifft und vom reflektierenden Empfangselement umgelenkt wird. Das reflektierende Empfangselement sorgt für eine Strahlumlenkung des auftreffenden Empfangsteilstrahls, wobei die Strahlform des Empfangsteilstrahls im Wesentlichen unverändert bleibt. Bei der dritten Empfangsanordnung (Planspiegel) erfolgt eine Strahlumlenkung der Empfangsteilstrahlen um 90°, wobei grundsätzlich auch Umlenkwinkel ≠ 90° möglich sind (Konkav- und Konvexspiegel).

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Vorrichtung zur optischen Distanzmessung bestehend aus einer Distanzmesseinrichtung und einer Anpasseinrichtung;
- FIG. 2: die Anpasseinrichtung der FIG. 1 mit einem ersten Array von reflektierenden Sendeelementen und einem zweiten Array von reflektierenden Empfangsele-menten; und
- FIGN. 3A-C: die optische Distanzmessung mit Hilfe der erfindungsgemäßen Vorrichtung der FIG. 1 zu einem Zielobjekt, das als Einzelretroreflektor (FIG. 3A), als streuendes Zielobjekt (FIG. 3B) und als Flächenretroreflektor (FIG. 3C) aus-gebildet ist.

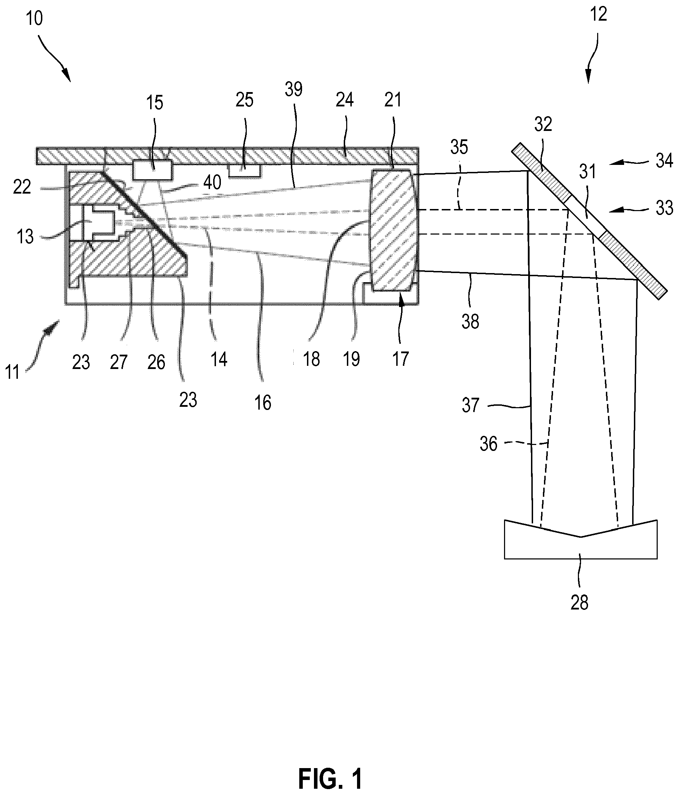

**FIG. 1** zeigt eine erfindungsgemäße Vorrichtung **10** zur optischen Distanzmessung zu einem Zielobjekt bestehend aus einer Distanzmesseinrichtung **11** und einer Anpasseinrichtung **12**, die außerhalb der Distanzmesseinrichtung 11 angeordnet ist. Die Vorrichtung 10 ist zur Distanzmessung zu streuenden Zielobjekten und zu reflektierenden Zielobjekten ausgebildet.

Die Distanzmesseinrichtung 11 umfasst eine als Strahlquelle **13** ausgebildete erste elektrooptische Komponente, die einen Laserstrahl **14** erzeugt, eine als Detektor **15** ausgebildete zweite elektrooptische Komponente, die einen an einem Zielobjekt gestreuten oder reflektierten Empfangsstrahl **16** empfängt, und ein Strahlformungssystem **17**, das eine erste Laserstrahlformungsoptik **18** zur Strahlformung des Laserstrahls 14 und eine erste Empfangsstrahlformungsoptik **19** zur Strahlformung des Empfangsstrahls 16 umfasst. Im Ausführungsbeispiels sind die erste Laserstrahlformungsoptik 18 und die erste Empfangsstrahlformungsoptik 19 in eine gemeinsame Strahlformungsoptik **21** integriert.

Im Ausführungsbeispiel ist die Distanzmesseinrichtung 11 koaxial ausgebildet, d.h. der Laserstrahl 14 und der Empfangsstrahl 16 verlaufen koaxial zueinander. Um den Laserstrahl 14 und den Empfangsstrahl 16 voneinander zu trennen, ist eine Strahlteilungsoptik **22** vorgesehen, die im Strahlengang des Laserstrahls 14 zwischen der Strahlquelle 13 und der Strahlformungsoptik 21 und im Strahlengang des Empfangsstrahls 16 zwischen der Strahlformungsoptik 21 und dem Detektor 15 angeordnet ist. Die Strahlteilungsoptik 22 kann beispielsweise als Polarisationsstrahlteiler, als Lochspiegel oder sonstiges strahlteilendes optisches Element ausgebildet sein.

Die Distanzmesseinrichtung 11 weist zusätzlich einen Optikträger **23** und eine Leiterplatte **24** auf. Die Strahlquelle 13, die Strahlformungsoptik 21 und die Strahlteilungsoptik 22 sind am Optikträger 23 befestigt und der Detektor 15 ist an der Leiterplatte 24 befestigt. Der Aufbau der Distanzmesseinrichtung 11 entspricht dem in der EP 2 527 867 B1 beschriebenen Aufbau. Eine Steuer- und Auswerteeinrichtung **25** ist mit der Strahlquelle 13 und dem Detektor 15 verbunden und bestimmt beispielsweise aus einer Zeitdifferenz zwischen einem Referenzstrahl und dem Empfangsstrahl die Distanz zum Zielobjekt.

Im Strahlengang des Laserstrahls 14 kann zwischen der Strahlquelle 13 und der Strahlteilungsoptik 22 eine Blende **26** angeordnet und in den monolithischen Optikträger 18 integriert werden. Die Blende 26 dient dazu, den Öffnungswinkel der Strahlquelle 13 zu begrenzen und die Geometrie des Laserstrahls 14 an die Strahlteilungsoptik 22 und die erste Laserstrahlformungsoptik 18 anzupassen. Zwischen der Strahlquelle 13 und der Blende 26 kann eine Lichtfalle **27** vorgesehen werden, die wie die Blende 26 in den monolithischen Optikträger 23 integriert werden kann. Die Lichtfalle 27 dient dazu, auftreffendes Licht zu absorbieren und unerwünschte Reflektionen zu verhindern. Dazu ist die Lichtfalle 27 auf der Innenseite mit einer reflexarmen, absorbierenden Beschichtung versehen. Durch die Blende 26 und die Lichtfalle 27 können optisches und elektrisches Übersprechen von der Strahlquelle 13 zum Detektor 15 sowie störende Artefakte im Laserstrahl reduziert werden.

Als Zielobjekt wird im Ausführungsbeispiel der FIG. 1 ein als Einzelretroreflektor **28** ausgebildetes reflektierendes Zielobjekt verwendet, das sich in kurzer Entfernung zur Distanzmesseinrichtung 11 befindet. Die Anpasseinrichtung 12 umfasst eine zweite Laserstrahlformungsoptik **31** und eine zweite Empfangsstrahlformungsoptik **32.** Die zweite Laserstrahlformungsoptik 31 umfasst ein erstes Array mit reflektierenden Sendeelementen und die zweite Empfangsstrahlformungsoptik 32 umfasst ein zweites Array mit reflektierenden Empfangselementen. Die erste Laserstrahlformungsoptik 18 und zweite Laserstrahlformungsoptik 31 werden gemeinsam als Laserstrahlformungseinrichtung **33** bezeichnet und die erste Empfangsstrahlformungsoptik 19 und zweite Empfangsstrahlformungsoptik 32 werden gemeinsam als Empfangsstrahlformungseinrichtung **34** bezeichnet.

Die Strahlquelle 13 sendet den Laserstrahl 14 aus, der auf die Strahlteilungsoptik 22 gerichtet ist. An der Strahlteilungsoptik 22 wird ein größtmöglicher Teil des Laserstrahls 14 transmittiert und trifft auf die erste Laserstrahlformungsoptik 18, an der eine erste Strahlformung des Laserstrahls erfolgt. Die erste Laserstrahlformungsoptik 18 ist im Ausführungsbeispiel als Kollimationslinse ausgebildet, die den Laserstrahl 14 kollimiert und als kollimierten Laserstrahl **35** auf die zweite Laserstrahlformungsoptik 31 richtet. Die optischen Eigenschaften der Kollimationslinse 18 sind an die Distanzmessung von streuenden Zielobjekten in großer Entfernung (Unendlich) angepasst. Der kollimierte Laserstrahl 35 trifft auf die zweite Laserstrahlformungsoptik 31, an der eine Umlenkung und ggfs. eine weitere Strahlformung des Laserstrahls erfolgt. Der umgelenkte und ggfs. geformte Laserstrahl **36** trifft auf das Zielobjekt 28.

Ein am Zielobjekt 28 reflektierter Empfangsstrahl **37** trifft auf die zweite Empfangsstrahlformungsoptik 32, an der eine Umlenkung und ggfs. eine Strahlformung des Empfangsstrahls erfolgt. Der umgelenkte und ggfs. umgeformte Empfangsstrahl **38** ist auf die erste Empfangsstrahlformungsoptik 19 gerichtet. An der ersten Empfangsstrahlformungsoptik 19 erfolgt eine weitere Strahlformung des umgelenkten und ggfs. umgeformten Empfangsstrahls 38. Der umgeformte Empfangsstrahl **39** wird auf die Strahlteilungsoptik 22 gerichtet und an der Strahlteilungsoptik 22 umgelenkt. Der umgelenkte Empfangsstrahl **40** trifft auf den Detektor 15.

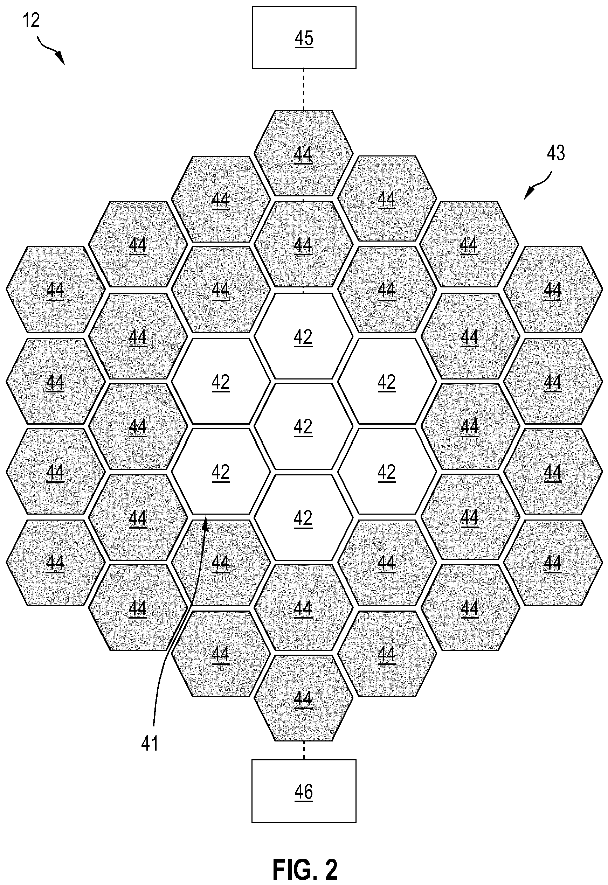

**FIG. 2** zeigt die Anpasseinrichtung 12 der FIG. 1 mit der zweiten Laserstrahlformungsoptik 31, die als erstes Array **41** von reflektierenden Sendeelementen **42** ausgebildet ist, und der zweiten Empfangsstrahlformungsoptik 32, die als zweites Array **43** von reflektierenden Empfangselementen **44** ausgebildet ist.

Die Distanzmesseinrichtung 11 erzeugt mit Hilfe der ersten Laserstrahlformungsoptik 18 den kollimierten Laserstrahl. Im Strahlengang des kollimierten Laserstrahls ist die zweite Laserstrahlformungsoptik 31 angeordnet, die den Laserstrahl an das Zielobjekt anpasst. Die Distanzmesseinrichtung 11 weist einen koaxialen Aufbau auf, was bedeutet, dass der Laserstrahl und Empfangsstrahl im gemeinsamen Strahlengang koaxial zueinander angeordnet sind. Die Strahlteilungsoptik 22 trennt den Laserstrahl 14 und Empfangsstrahl 16 voneinander, im Ausführungsbeispiel der FIG. 1 passiert der Laserstrahl 14 die Strahlteilungsoptik 22 und der Empfangsstrahl 16 wird an der Strahlteilungsoptik 22 umgelenkt.

Über die Orientierung der reflektierenden Sendeelemente 42 kann der Laserstrahl an den Typ des Zielobjektes, die Entfernung zum Zielobjekt und die Größe des Zielobjektes angepasst werden. Die reflektierenden Sendeelemente 42 sind mittels einer ersten Steuereinheit **45** in ihrer Orientierung verstellbar; jedes reflektierende Sendeelement 42 ist mit einem Antriebselement verbunden, das die Orientierung des reflektierenden Sendeelementes 42 zum Laserstrahl verändert. Die reflektierenden Empfangselemente 44 sind mittels einer zweiten Steuereinheit **46** in ihrer Orientierung verstellbar; jedes reflektierende Empfangselement 44 ist mit einem Antriebselement verbunden, das die Orientierung des reflektierenden Empfangselementes 44 zum Empfangsstrahl verändert.

Die reflektierenden Sendeelemente 42 des ersten Arrays 41 und die reflektierenden Empfangselemente 44 des zweiten Arrays 43 weisen eine ebene Spiegeloberfläche auf. Die reflektierenden Sendeelemente 42 bilden einen Facettenspiegel, wobei die einzelnen Sendeelemente 42 Teilstrahlen des Laserstrahls reflektieren; die reflektierten Teilstrahlen können sich hinter der zweiten Laserstrahlformungsoptik 31 überlagern. Die reflektierenden Empfangselemente 44 bilden einen Facettenspiegel, wobei die einzelnen Empfangselemente 44 Teilstrahlen des Empfangsstrahls reflektieren; die reflektierten Teilstrahlen können sich hinter der zweiten Empfangsstrahlformungsoptik 32 überlagern.

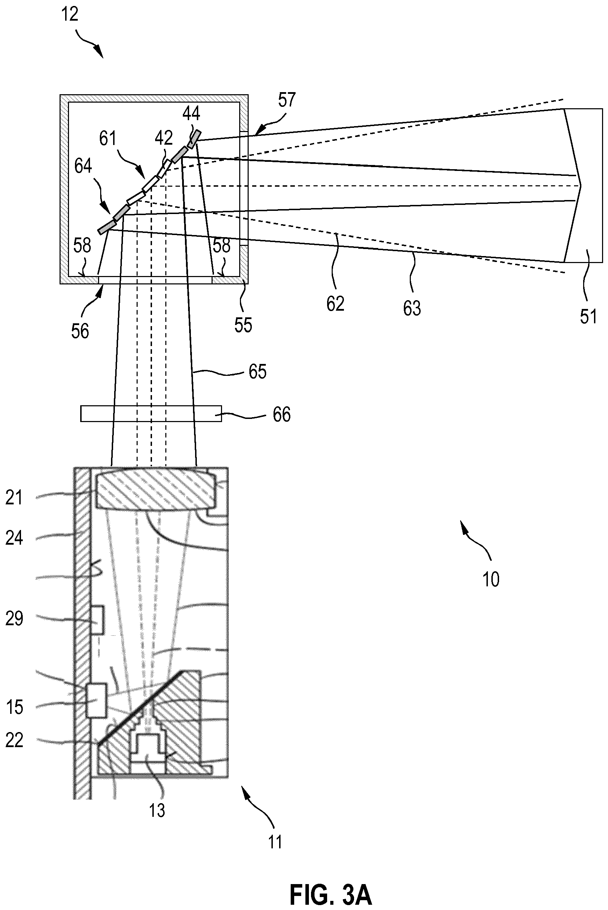

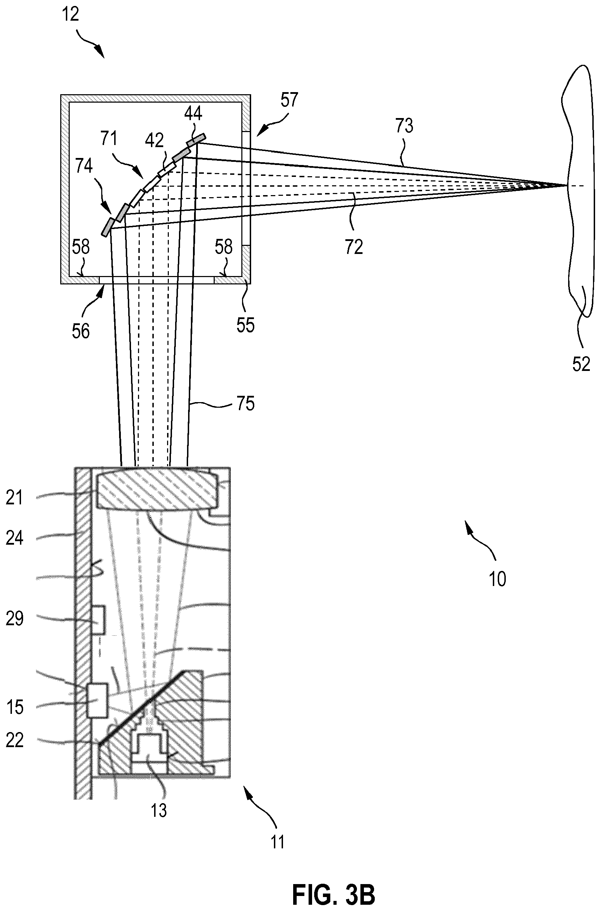

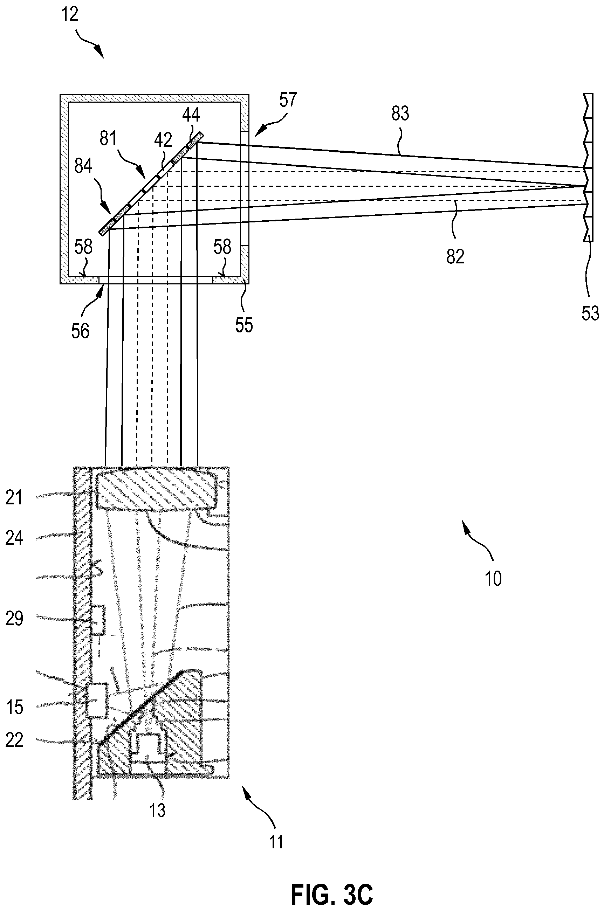

**FIGN. 3A-C** zeigen die optische Distanzmessung mit Hilfe der erfindungsgemäßen Vorrichtung 10 zu einem Zielobjekt, das als Einzelretroreflektor **51** (FIG. 3A), als streuendes Zielobjekt **52** (FIG. 3B) und als Flächenretroreflektor **53** (FIG. 3C) ausgebildet ist.

Das erste und zweite Array 41, 42 sind in einem Gehäuse **55** angeordnet, das eine erste Öffnung **56** und eine zweite Öffnung **57** aufweist. Der kollimierte Laserstrahl 35 tritt über die erste Öffnung 56 in das Gehäuse 55 ein und wird von den reflektierenden Sendeelementen 42 des ersten Arrays 41 umgeformt. Die an Sendeelementen 42 reflektierten Teilstrahlen verlassen das Gehäuse 55 über die zweite Öffnung 57 und überlagern sich außerhalb des Gehäuses. Um die Strahlungsleistung des Laserstrahls und/oder des Empfangsstrahls zu reduzieren, können ein oder mehrere reflektierende Sendeelemente 42 bzw. ein oder mehrere reflektierende Empfangselemente 44 so ausgerichtet werden, dass ihre Teilstrahlen auf eine Absorptionsfläche **58** innerhalb des Gehäuses 55 treffen und das Gehäuse 55 nicht über die erste oder zweite Öffnung 56, 57 verlassen.

FIG. 3A zeigt die optische Distanzmessung zum Einzelretroreflektor 51. Beim Einzelretroreflektor 51 ist wichtig, dass das Zentrum des Einzelretroreflektors vom Laserstrahl getroffen wird, damit der reflektierte Empfangsstrahl in jedem Fall auf die erste Empfangsstrahlformungsoptik 19 auftrifft und vom Detektor 15 erfasst wird. Trifft der Laserstrahl nicht auf das Zentrum des Einzelretroreflektors 51, kann der reflektierte Empfangsstrahl durch Parallelversatz die erste Empfangsstrahlformungsoptik 19 verfehlen. Um die Genauigkeit, mit der der Laserstrahl auf den Einzelretroreflektor 51 ausgerichtet werden muss, zu reduzieren, ist es vorteilhaft, den Laserstrahl aufzuweiten.

Die reflektierenden Sendeelemente 42 des ersten Arrays 41 bilden für den Laserstrahl einen Konvexspiegel **61**, der zu einer Aufweitung des Laserstrahls führt. Die in FIG. 3A gezeigte Anordnung der reflektierenden Sendeelemente 42 kann in der ersten Steuereinheit 45 als erste Sendeanordnung für das erste Array 41 gespeichert werden. Für Einzelretroreflektoren 51, die in unterschiedlichen Abständen zur Distanzmesseinrichtung 11 angeordnet sind oder die unterschiedliche Größe aufweisen, sind vorteilhaft in der ersten Steuereinheit 45 mehrere erste Sendeanordnungen für das erste Array 41 gespeichert. Dabei gilt, dass die Brennweite des Konvexspiegels 61, den die reflektierenden Sendeelemente 42 bilden, mit zunehmendem Abstand grösser wird.

Der Laserstrahl wird vom Konvexspiegel 61 in einen aufgeweiteten Laserstrahl **62** umgeformt. Im Ausführungsbeispiel bilden alle reflektierenden Sendeelemente 42 den Konvexspiegel 61, wobei jedes reflektierende Sendeelement 42 einen Teilstrahl des kollimierten Laserstrahls 35 reflektiert, die reflektierten Teilstrahlen verlassen das Gehäuse 55 über die zweite Öffnung 57 und überlagern sich zum aufgeweiteten Laserstrahl 62. Der aufgeweitete Laserstrahl 62 trifft auf den Einzelretroreflektor 51 und wird dort reflektiert. Der reflektierte Empfangsstrahl **63** tritt über die zweite Öffnung 57 in das Gehäuse 55 ein und wird von den reflektierenden Empfangselementen 44 des zweiten Arrays 43 umgelenkt und geformt. Die reflektierenden Empfangselemente 44 bilden für den reflektierten Empfangsstrahl 63 einen Konvexspiegel **64**, der zu einer Aufweitung des Empfangsstrahls führt. Der aufgeweitete Empfangsstrahl **65** verlässt das Gehäuse 55 durch die erste Öffnung 56.

Die in FIG. 3A gezeigte Anordnung der reflektierenden Empfangselemente 44 kann in der zweiten Steuereinheit 46 als erste Empfangsanordnung für das zweite Array 43 gespeichert werden. Für Einzelretroreflektoren 51, die in unterschiedlichen Abständen zur Distanzmesseinrichtung 11 angeordnet sind oder die unterschiedliche Größe aufweisen, sind in der zweiten Steuereinheit 46 vorteilhaft mehrere erste Empfangsanordnungen für das zweite Array 43 gespeichert. Dabei gilt, dass die Brennweite des Konvexspiegels 64, den die reflektierenden Empfangselemente 44 bilden, mit zunehmendem Abstand grösser wird.

Die Strahlungsleistung der Laserstrahlquelle 13 ist für die optische Distanzmessung zu streuenden Zielobjekten ausgelegt, bei denen nur ein kleiner Anteil den Detektor 15 erreicht. Bei reflektierenden Zielobjekten, vor allem bei Einzelretroreflektoren, ist die auf den Detektor 15 auftreffenden Strahlungsleistung zu groß, was zu einem Übersteuern des Detektors 15 führen kann. Um ein Übersteuern des Detektors 15 zu verhindern, muss die Strahlungsleistung reduziert werden, wobei die Reduzierung beim Laserstrahl, beim Empfangsstrahl oder beim Laser- und Empfangsstrahl erfolgen kann. Um die Strahlungsleistung des reflektierten Empfangsstrahls 63 zu reduzieren, können einige reflektierende Empfangselemente 44 so ausgerichtet werden, dass ihre Teilstrahlen auf die Absorptionsfläche 58 treffen und das Gehäuse 55 nicht über die erste Öffnung 56 verlassen. Alternativ oder zusätzlich kann die Strahlungsleistung des Laserstrahls und/oder des Empfangsstrahls mittels einer Dämpfungseinrichtung **66** reduziert werden.

Die Dämpfungseinrichtung 66 ist im Strahlengang des Laserstrahls zwischen der ersten Laserstrahlformungsoptik 18 und der zweiten Laserstrahlformungsoptik 31 angeordnet. Diese Anordnung der Dämpfungseinrichtung zwischen der ersten und zweiten Laserstrahlformungsoptik hat den Vorteil, dass die Dämpfung im kollimierten Laserstrahl erfolgt. Das Dämpfungselement kann im kollimierten Laserstrahl schräg gestellt werden, um eine Rückreflexion des Laserstrahls in Richtung der Laserstrahlquelle bzw. des Detektors zu verhindern oder zumindest zu verringern.

Die Dämpfungseinrichtung ist zwischen einem ersten Zustand, in dem eine Dämpfung erfolgt, und einem zweiten Zustand, in dem keine Dämpfung erfolgt, verstellbar. Eine Dämpfungseinrichtung, die zwischen zwei Zuständen verstellbar ist, eignet sich für die optische Distanzmessung zu streuenden Zielobjekten und zu reflektierenden Zielobjekten, die als Einzelretroreflektor oder als Flächenretroreflektor ausgebildet sind. Der erste Zustand der Dämpfungseinrichtung ist für die optische Distanzmessung zu reflektierenden Zielobjekten vorgesehen und der zweite Zustand der Dämpfungseinrichtung ist für die optische Distanzmessung zu streuenden Zielobjekten vorgesehen.

FIG. 3B zeigt die optische Distanzmessung zum streuenden Zielobjekt 52. Bei streuenden Zielobjekten ist wichtig, dass die vom Detektor 15 erfasste Strahlungsleistung groß genug ist; außerdem sollte der Strahldurchmesser des Laserstrahls beim Auftreffen auf das streuende Zielobjekt nicht zu groß sein. Um den Strahldurchmesser des Laserstrahls auf dem streuenden Zielobjekt 52 zu begrenzen, ist es vorteilhaft, den Laserstrahl zu fokussieren.

Die reflektierenden Sendeelemente 42 des ersten Arrays 41 bilden für den Laserstrahl einen Konkavspiegel **71**, der zu einer Fokussierung des Laserstrahls führt. Die in FIG. 3B gezeigte Anordnung der reflektierenden Sendeelemente 42 kann in der ersten Steuereinheit 45 als zweite Sendeanordnung für das erste Array 41 gespeichert werden. Für streuende Zielobjekte 52, die in unterschiedlichen Abständen zur Distanzmesseinrichtung 11 angeordnet sind und/oder die unterschiedliche Rückstreugrade (Albedo) aufweisen, sind in der ersten Steuereinheit 45 vorteilhaft mehrere zweite Sendeanordnungen für das erste Array 41 gespeichert. Dabei gilt, dass die Brennweite des Konkavspiegels 71, den die reflektierenden Sendeelemente 42 bilden, mit zunehmendem Abstand grösser wird.

Der kollimierte Laserstrahl 35 tritt über die erste Öffnung 56 in das Gehäuse 55 ein und wird von den reflektierenden Sendeelemente 42 des ersten Arrays 41 umgelenkt und geformt. Im Ausführungsbeispiel bilden alle reflektierenden Sendeelemente 42 den Konkavspiegel 71, wobei jedes reflektierende Sendeelement 42 einen Teilstrahl des kollimierten Laserstrahls 35 reflektiert. Die reflektierten Teilstrahlen verlassen das Gehäuse 55 über die zweite Öffnung 57 und überlagern sich zum fokussierten Laserstrahl **72.** Der fokussierte Laserstrahl 72 trifft auf den streuenden Zielobjekt 52 und wird dort gestreut. Der gestreute Empfangsstrahl **73** tritt über die zweite Öffnung 57 in das Gehäuse 55 ein und wird von den Empfangselementen 44 des zweiten Arrays 43 umgelenkt und ggfs. geformt. Die reflektierenden Empfangselemente 44 bilden einen Konkavspiegel **74**, der zu einer Fokussierung des Empfangsstrahls führt. Der fokussierte Empfangsstrahl **75** verlässt das Gehäuse 55 durch die erste Öffnung 56.

Die in FIG. 3B gezeigte Anordnung der reflektierenden Empfangselemente 44 kann in der zweiten Steuereinheit 46 als zweite Empfangsanordnung für das zweite Array 43 gespeichert werden. Für streuende Zielobjekte 52, die in unterschiedlichen Abständen zur Distanzmesseinrichtung 11 angeordnet sind und/oder die unterschiedliche Rückstreugrade (Albedo) aufweisen, sind in der zweiten Steuereinheit 46 vorteilhaft mehrere zweite Empfangsanordnungen für das zweite Array 43 gespeichert. Dabei gilt, dass die Brennweite des Konkavspiegels 74, den die reflektierenden Empfangselemente 44 bilden, mit zunehmendem Abstand grösser wird.

FIG. 3C zeigt die optische Distanzmessung zum Flächenretroreflektor 53. Bei Flächenretroreflektoren ist das Verhältnis von Strahldurchmesser des Laserstrahls zur typischen Abmessung des Flächenretroreflektors wichtig. Dabei sollte der Strahldurchmesser des Laserstrahls beim Auftreffen auf den Flächenretroreflektor in der Größenordnung der typischen Abmessung liegen. Um dies zu gewährleisten, kann der Laserstrahl bei großen Abständen leicht fokussiert und bei kleinen Abständen leicht aufgeweitet werden.

Die reflektierenden Sendeelemente 42 des ersten Arrays 41 bilden für den Laserstrahl einen Planspiegel **81.** der zu einer Umlenkung des Laserstrahls führt. Die in FIG. 3C gezeigte Anordnung der reflektierenden Sendeelemente 42 kann in der ersten Steuereinheit 45 als dritte Sendeanordnung für das erste Array 41 gespeichert werden. Für Flächenretroreflektoren 53, die in unterschiedlichen Abständen zur Distanzmesseinrichtung 11 angeordnet sind oder die unterschiedliche Größe aufweisen, sind vorteilhaft in der ersten Steuereinheit 45 mehrere dritte Sendeanordnungen für das erste Array 41 gespeichert.

Der kollimierte Laserstrahl 35 tritt über die erste Öffnung 56 in das Gehäuse 55 ein und wird von den reflektierenden Sendeelementen 42 des ersten Arrays 41 umgelenkt. Im Ausführungsbeispiel bilden alle reflektierenden Sendeelemente 42 den Planspiegel 81, wobei jedes reflektierende Sendeelement 42 einen Teilstrahl des kollimierten Laserstrahls 35 reflektiert. Die reflektierten Teilstrahlen verlassen das Gehäuse 55 über die zweite Öffnung 57 und überlagern sich zum kollimierten Laserstrahl **82.** Der kollimierte Laserstrahl 82 trifft auf das reflektierende Zielobjekt 53 und wird reflektiert. Der reflektierte Empfangsstrahl **83** tritt über die zweite Öffnung 57 in das Gehäuse 55 ein und wird von den reflektierenden Empfangselementen 44 des zweiten Arrays 43 umgelenkt. Die reflektierenden Empfangselemente 44 bilden für den Flächenretroreflektor 53 einen Planspiegel **84**, der zu einer Umlenkung führt. Um die Strahlungsleistung des Empfangsstrahls 83 zu reduzieren, sind einige reflektierende Empfangselemente 44 so ausgerichtet, dass ihre Teilstrahlen auf die Absorptionsfläche 58 treffen und das Gehäuse 55 nicht über die zweite Öffnung 57 verlassen.

Die in FIG. 3C gezeigte Anordnung der reflektierenden Empfangselemente 44 kann in der zweiten Steuereinheit 46 als dritte Empfangsanordnung für das zweite Array 43 gespeichert werden. Für Flächenretroreflektoren 53, die in unterschiedlichen Abständen zur Distanzmesseinrichtung 11 angeordnet sind oder die unterschiedliche Größe aufweisen, sind in der zweiten Steuereinheit 46 vorteilhaft mehrere dritte Empfangsanordnungen für das zweite Array 43 gespeichert.

## Patentansprüche

1. Vorrichtung (10) zur optischen Distanzmessung zu einem streuenden Zielobjekt (52) oder einem reflektierenden Zielobjekt (51; 53), aufweisend:
▪ eine Laserstrahlquelle (13), die als erste elektrooptische Komponente ausgebildet ist und einen Laserstrahl (14) aussendet,
▪ einen Detektor (15), der als zweite elektrooptische Komponente ausgebildet ist und einen am streuenden Zielobjekt (52) gestreuten Empfangsstrahl (73) oder am reflektierenden Zielobjekt (51; 53) reflektierten Empfangsstrahl (63; 83) empfängt, und
▪ eine Laserstrahlformungseinrichtung (33) mit einer ersten Laserstrahlformungsoptik (18) und einer zweiten Laserstrahlformungsoptik (31), die von der ersten Laserstrahlformungsoptik (18) verschieden ist und im Strahlengang des Laserstrahls (14, 34) hinter der ersten Laserstrahlformungsoptik (18) angeordnet ist,
**dadurch gekennzeichnet, dass** die zweite Laserstrahlformungsoptik (31) als erstes Array (41) von reflektierenden Sendeelementen (42) ausgebildet ist, wobei die Orientierung der reflektierenden Sendeelemente (42) mittels einer ersten Steuereinheit (45) verstellbar ist.

2. Vorrichtung nach Anspruch 1, **dadurch gekennzeichnet, dass** in der ersten Steuereinheit (45) mindestens eine erste Sendeanordnung für das erste Array (41) gespeichert ist, wobei die reflektierenden Sendeelemente (42) in der ersten Sendeanordnung für den Laserstrahl einen Konvexspiegel (61) bilden.

3. Vorrichtung nach Anspruch 1, **dadurch gekennzeichnet, dass** in der ersten Steuereinheit (45) mindestens eine zweite Sendeanordnung für das erste Array (41) gespeichert ist, wobei die reflektierenden Sendeelemente (42) in der zweiten Sendeanordnung für den Laserstrahl einen Konkavspiegel (71) bilden.

4. Vorrichtung nach Anspruch 1, **dadurch gekennzeichnet, dass** in der ersten Steuereinheit mindestens eine dritte Sendeanordnung für das erste Array (41) gespeichert ist, wobei die reflektierenden Sendeelemente (42) in der dritten Sendeanordnung für den Laserstrahl einen Planspiegel (81) bilden.

5. Vorrichtung nach Anspruch 1, **dadurch gekennzeichnet, dass** in der ersten Steuereinheit (45) mindestens eine erste Sendeanordnung für das erste Array (41), mindestens eine zweite Sendeanordnung für das erste Array (41) und mindestens eine dritte Sendeanordnung für das erste Array (41) gespeichert ist, wobei die reflektierenden Sendeelemente (42) in der ersten Sendeanordnung für den Laserstrahl einen Konvexspiegel (61) bilden, die reflektierenden Sendeelemente (42) in der zweiten Sendeanordnung für den Laserstrahl einen Konkavspiegel (71) bilden und die reflektierenden Sendeelemente (42) in der dritten Sendeanordnung für den Laserstrahl einen Planspiegel (81) bilden.

6. Vorrichtung nach einem der Ansprüche 1 bis 5, **dadurch gekennzeichnet, dass** die reflektierenden Sendeelemente (42) des ersten Arrays (41) zwischen einem ersten Sendewinkelbereich und einem zweiten Sendewinkelbereich verstellbar sind, wobei ein von einem reflektierenden Sendeelement (42) umgelenkter Sendeteilstrahl des Laserstrahls im ersten Sendewinkelbereich eine zweite Öffnung (57), die im Strahlengang des Laserstrahls hinter der zweiten Laserstrahlformungsoptik (31) angeordnet, passiert und im zweiten Sendewinkelbereich auf eine Absorptionsfläche (58) auftrifft.

7. Vorrichtung nach einem der Ansprüche 1 bis 6, **gekennzeichnet durch** eine Empfangsstrahlformungseinrichtung (34) mit einer ersten Empfangsstrahlformungsoptik (19) und einer zweiten Empfangsstrahlformungsoptik (32), die von der ersten Empfangsstrahlformungsoptik (19) verschieden ist und im Strahlengang des Empfangsstrahls vor der ersten Empfangsstrahlformungsoptik (19) angeordnet ist.

8. Vorrichtung nach Anspruch 7, **dadurch gekennzeichnet, dass** die zweite Empfangsstrahlformungsoptik (32) als zweites Array (43) von reflektierenden Empfangselementen (44) ausgebildet ist und die Orientierung der reflektierenden Empfangselemente (44) mittels einer zweiten Steuereinheit (46) verstellbar ist.

9. Vorrichtung nach Anspruch 8, **dadurch gekennzeichnet, dass** in der zweiten Steuereinheit (46) mindestens eine erste Empfangsanordnung für das zweite Array (43) gespeichert ist, wobei die reflektierenden Empfangselemente (44) in der ersten Empfangsanordnung für den Empfangsstrahl einen Konvexspiegel (64) bilden.

10. Vorrichtung nach Anspruch 8, **dadurch gekennzeichnet, dass** in der zweiten Steuereinheit (46) mindestens eine zweite Empfangsanordnung für das zweite Array (43) gespeichert ist, wobei die reflektierenden Empfangselemente (44) in der zweiten Empfangsanordnung für den Empfangsstrahl einen Konkavspiegel (74) bilden.

11. Vorrichtung nach Anspruch 8, **dadurch gekennzeichnet, dass** in der zweiten Steuereinheit (46) mindestens eine dritte Empfangsanordnung für das zweite Array (43) gespeichert ist, wobei die reflektierenden Empfangselemente (44) in der dritten Empfangsanordnung für den Empfangsstrahl einen Planspiegel (84) bilden.

12. Vorrichtung nach Anspruch 8, **dadurch gekennzeichnet, dass** in der zweiten Steuereinheit (46) mindestens eine erste Empfangsanordnung für das zweite Array (43), mindestens eine zweite Empfangsanordnung für das zweite Array (43) und mindestens eine dritte Empfangsanordnung für das zweite Array (43) gespeichert ist, wobei die reflektierenden Empfangselemente (44) in der ersten Empfangsanordnung für den Empfangsstrahl einen Konvexspiegel (64) bilden, die reflektierenden Empfangselemente (44) in der zweiten Empfangsanordnung für den Empfangsstrahl einen Konkavspiegel (74) bilden und die reflektierenden Empfangselemente (44) in der dritten Empfangsanordnung für den Empfangsstrahl einen Planspiegel (84) bilden.

13. Vorrichtung nach einem der Ansprüche 8 bis 12, **dadurch gekennzeichnet, dass** die reflektierenden Empfangselemente (44) unabhängig voneinander zwischen einem ersten Empfangswinkelbereich und einem zweiten Empfangswinkelbereich verstellbar sind, wobei ein von einem reflektierenden Empfangselement (44) umgelenkter Empfangsteilstrahl des Empfangsstrahls im ersten Empfangswinkelbereich auf den Detektor (15) auftrifft und im zweiten Empfangswinkelbereich auf eine Absorptionsfläche (58) auftrifft.
